# EUROPEAN PATENT SPECIFICATION

(11) **EP 1 353 520 B1**
(45) Date of publication and mention of the grant of the patent: **24.05.2006**
(21) Application number: 03252052.0
(22) Date of filing: 31.03.2003
(51) Int. Cl.: H04Q 7/22, H04L 12/18

(54) **Method for implementing IU-Flex-based MBMS**
Verfahren zum implementieren von IU-Flex-basiertem MBMS
Procédé pour implémenter MBMS basé sur IU-Flex

(30) Priority: 09.04.2002 CN 02116572
(43) Date of publication of application: 15.10.2003
(73) Proprietor: Huawei Technologies Co., Ltd., Guangdong, Shenzhen 518057 (CN)
(72) Inventor: Zhao, Jianguo c/o Huawei Techn.Co., ltd., Shenzen City 518057 Guangdong (CN)
(74) Representative: Mounteney, Simon James

(56) References cited:
- "3rd Generation Partnership Project; Technical Specification Group Servivces and System Aspects; Multimedia Broadcast/Multicast Service; Architecture and Functional Description (Release 5)" 3GPP TR 23.846 0.3.0, 2 April 2002 (2002-04-02), pages 1-20, XP002249708
- "Universal Mobile Telecommunication System (UMTS);Multimedia Broadcast/Multicast Service (MBMS); Stage 1 (3GPP TS 22.146 version 5.2.0 Release 5)" ETSI TS 122 146 V5.2.0, XX, XX, 1 March 2002 (2002-03-01), pages 1-15, XP002208067
- "3rd Generation Partnership Project; Technical Specification Group Servivces and System Aspects; Multimedia Broadcast/Multicast Service; Architecture and Functional Description (Release 6)" 3GPP TR 23.846 2.0.0, 8 September 2002 (2002-09-08), pages 1-114, XP002249709

## Description

### BACKGROUND OF THE INVENTION

### 1. Field of the Invention

The present invention relates to a method for implementing MBMS in wireless communication systems, particularly to a method for implementing Iu-Flex-based MBMS.

### 2. Background of the Invention

Multicast is a method for sending data from a source to many destinations. With multicast, the same data can be sent to many subscribers by sending only once, thus network resources can be saved. According to 3GPP standard, a node in a wireless access network can be connected to a plurality of central network nodes with Iu-Flex technology. For example, a General Packet Radio Services (GPRS) Radio Network Controller (RNC) or Universal Mobile Telecommunication System (UMTS) Base Station Controller (BSC) can be connected to a plurality of Serving GPRS Support Nodes (SGSN). In this way, when MBMS is implemented in Iu-Flex-based network environment, MBMS traffics may be sent from a plurality of SGSNs to the same RNC, which results in waste of network bandwidth resource. In order to solve said problem, many methods for implementing MBMS in Iu-Flex-based network environments are proposed.

The first method utilizes a default SGSN, i.e., during the process of activating or relocating/switching a multicast traffic, the RNC determines whether to establish a multicast traffic or whether to insert the multicast traffic into an existing multicast traffic. To ensure that the RNC receives multicast traffic from only one SGSN, the RNC appoints a "Default SGSN", which is used to establish a channel for multicast traffic streams in advance. At the same time, the RNC establishes a RAB link to the SGSNs where the subscribers are registered to maintain the signal connections. However, the method may result in difficulty in traffic-based accounting because that the SGSNs where the subscribers are registered don't "know" the data volume transmitted through the "default SGSN".

The second method is to bypass the SGSNs. In this method, SGSNs participate in the alternation of multicast signals, but the GGSNs send multicast traffic directly to the RNC without the participation of the SGSNs. Because RNC can connect with GGSNs, internal structure of the network will be disclosed when subscribers roam between GGSNs and SGSNs, which will result in network security problems. At the same time, the method may also results in difficulty in traffic-based accounting because that the SGSNs where the subscribers are registered don't "know" the data volume transmitted through the "default SGSN".

The third method is to let the RNC choose one from multicast traffics. In this method, the RNC keeps receiving data stream from SGSNs but chooses one of them and forwards it to multicast subscribers. The disadvantage of the method is network resources cannot be utilized effectively.

The fourth method is to let the RNC to use a single connection to one of the SGSNs. In this method, when the MBMS data transmission begins and the RNC detects sending requests from many SGSNs, the RNC will establish connections to individual SGSNs but only establish a multicast RAB to one of the SGSNs, and no TAB is established between RNC and other SGSNs, but other SGSNs can receive multicast traffic from GGSNs and create traffic-based accounting information for specific subscribers. In an Iu-Flex-based network environment, even though a plurality of subscribers in the same multicast subscriber group is connected to the same RNC, they may be served by a plurality of SGSNs simultaneously. In this case, the MBMS message parameters at SGSNs should be identical. However, synchronization among SGSNs and parameter consistency for MBMS will increase the complexity of control and degrade the processing efficiency

The above four solutions are described in detail in 3^{rd} Generation Partnership Project; Technical Specification Group Services and System Aspects; Multimedia Broadcast/Multicast Service; Architecture and Functional Description (Release 5) 3GPPTR 23.846 0.3.0 (2002-04-02).

### SUMMARY OF THE INVENTION

The present invention provides a simple and reliable method for implementing lu-Flex-Based MBMS, which reduces consumption of network resources and contributes to network security and accounting management.

To attain said object, the invention provides a method for implementing Iu-Flex-Based MBMS as set out in claim 1. Preferred features are set out in claims 2-8.

In the present invention, the RNC chooses one of the SGSNs as a primary SGSN, and takes the RAB between the primary SGSN and itself as a primary path for receiving multicast traffic, and takes other SGSNs as secondary SGSNs and maintains the RAB connections to the secondary SGSNs. Compared to conventional method 1, the method will not result in difficulty in accounting management because the RNC takes other SGSNs as secondary SGSNs and maintains the RAB connections to the secondary SGSNs; compared to method 2, the present method will not result in network security problems and facilitates traffic-based accounting because there is no need to disclose internal structure of network when transmitting multicast traffics; compared to method 3, the method reduces waste of transmission resources because it mainly utilizes the primary SGSN to distribute multicast traffic; compared to method 4, the method will not result in any inconsistency of multicast parameters among SGSNs, thus the system can be implemented easily and reliably. Hence the method not only reduces consumption of network resources but also makes the multicast services simple and reliable, as well as improves network security and accounting management.

### BRIEF DESCRIPTION OF THE DRAWINGS

Fig.1 is the flowchart of an embodiment of a method in accordance with the present invention.
Fig.2 is the structure diagram of universal mobile telecommunication system in present invention.
Fig.3 is the schematic diagram of the RNC connection in present invention.
Fig.4 is the flowchart of establishing a multicast RAB;
Fig.5 is the flowchart of changing a multicast RAB.

### DETAILED DESCRIPTION OF THE DRAWINGS

The present invention is described in further detail according to the drawings and the following embodiment.

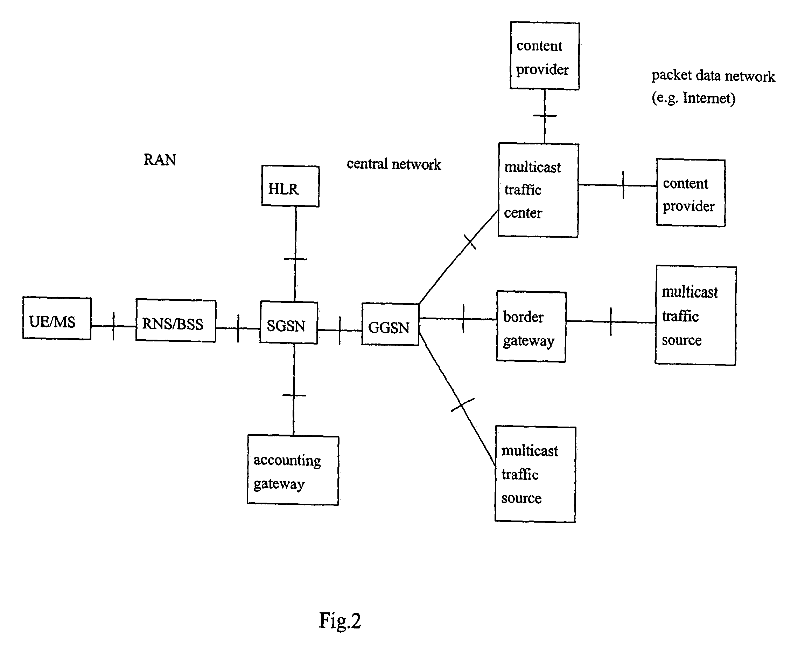

Fig.2 is the structural diagram of universal mobile telecommunication system in present invention. According to Fig.2, User Equipment (UE) is a generic term of mobile terminals in UMTS network. Mobile station (MS) is a generic term of mobile terminals in GPRS network; similarly, Radio Network System (RNS) and Base Station System (BSS) are wireless access network part of UMTS and GPRS networks, respectively. SGSNs (Serving GPRS Support Nodes) perform various service control and mobility management functions for multicast traffics and forward multicast traffic from GGSNs (Gateway GPRS Support Node) to relevant RNSs or BSSs. GGSNs are responsible for contacting internal/external multicast traffic sources and forwards data from multicast traffic sources to SOSNs. Multicast traffic center is also a multicast traffic source. Different from other multicast traffic sources, the multicast service center can arrange and manage multicast traffic from content providers as well as deliver authentication and accounting services for content providers. The border gateway controls data transmission from external networks. For example, the border gateway regulates that only the data from certain specific address or some specific ports is allowed to enter the mobile network. Accounting gateway is responsible for collecting multicast accounting records, processing them, and then sending the processed records to the accounting center. Home Location Registers (HLRs) store registration information and route information for registered multicast subscribers. Content providers send multicast traffic for broadcasting multicast traffic to the multicast traffic center, which distributes the multicast traffic to individual GGSN. GGSNs send the multicast traffic to S GSNs via established multicast links. SGSNs send the multicast traffic to multicast subscribers via appropriate wireless links (e.g., point-to-point link or point-to-multipoint link) in the wireless access networks.

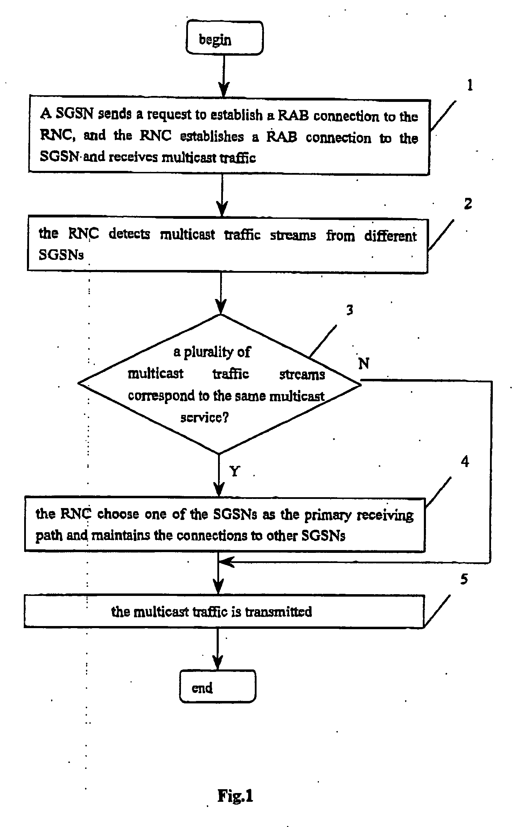

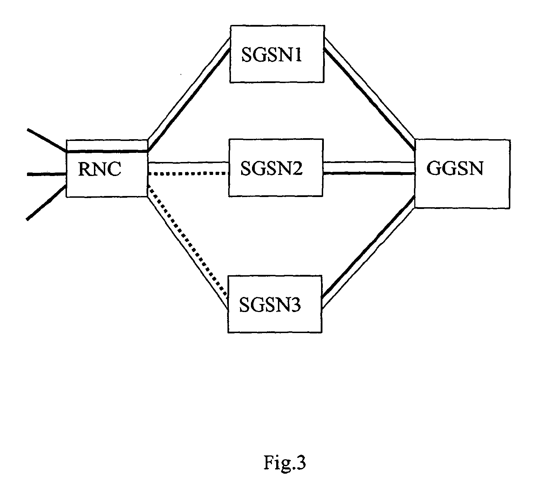

Referring to Fig. 1 for the detailed implementation process of present invention in an Iu-Flex-based network environment. According to Fig.1, when implementing multicast service, in step 1, a SGSN sends a request to establish a RAB connection for multicast service to the RNC, and the RNC establishes a corresponding multicast RAB between the RNC and said SGSN according to the request and receives multicast traffic stream from said SGSN. During the receiving process, in step 2, the RNC detects multicast traffic streams from different SGSNs connected to it. Then in step 3, the RNC determines whether many multicast streams correspond to the same multicast service. If the RNC finds the phenomenon of many multicast traffic streams corresponding to the same multicast service doesn't exist, turn to step 5 to continue transmitting the multicast traffic; if the RNC finds that many multicast traffic streams correspond to the same multicast service, process to step 4. In step 4, the RNC chooses one from the SGSNs as a primary SGSN and takes the RAB between the primary SGSN and itself as a primary path; at the same time, it takes other SGSNs as secondary SGSNs and maintains RAB connections to them, only minimum data volume or zero data volume will be sent from the secondary SGSNs to maintain the connections between the RNC and the secondary SGSNs. For the principle for multicast traffic transmission paths refers to Fig.3, wherein the narrow solid lines represent instruction transmission links, the thick solid lines represent the primary RAB links and multicast data streams, and the dotted lines represent secondary RAB links.

In order to minimize the amount of data packets sent from SGSNs to the RNC, the following modes can be used for the secondary SGSNs:
1). The RNC consults a limitation criterion with secondary SGSNs. Within the limitation, the secondary SGSNs stop forwarding multicast data packets to the RNC. When the limitation is exceeded, the secondary SGSNs will send actual multicast data packets to RNC again. After that, the RNC and the secondary SGSNs may consult again to determine a new limitation criterion, which may be a requirement for time, a limitation on data volume, or a requirement for the service environment (e.g., QoS), etc. For example, the data packets are less than 10,000 IP packets within 1 hour. If there is no limitation on time and data volume, the secondary SGSNs will not forward multicast data packets to the RNC.
2). When the secondary SGSNs send multicast traffic to the RNC, they only send compressed messages. After receiving the compressed messages, the RNC may determine the continuity, integrity, and correctness of the multicast traffic stream.
3). Combining with said method 1) and method 2), the RNC consults a limitation criterion with the secondary SGSNs. Within the limitation, the secondary SGSNs send compressed messages related with multicast data packets. When the limitation is exceeded, the secondary SGSNs send actual multicast data packets to RNC again. After that, the RNC and the secondary SGSNs may consult again to determine a new limitation criterion, which may be a requirement for time, a limitation on data volume, or a requirement for service environment (e.g., QoS), etc.
4. The RNC consults with the secondary SGSNs to determine a specific time or the amount of data packets as the handshake periodicity, which may also be configured by the operator. Secondary SGSNs don't send multicast traffic to the RNC normally. However, they send a few multicast data packets or compressed multicast data packets or RAB state message to the RNC every certain time and/or certain amount of data packets, in order to maintain the RAB connections to the RNC.

It should be noted that said modes from 1) to 4) can be used in alternation or in combination.

During the multicast traffic transmission process in step 5, the RNC will also determines whether to change the primary SGSN, if yes, it will choose one from the secondary SGSNs as a primary SGSN, then the RNC receives multicast traffic through the RAB between the new primary SGSN and itself and maintains the connections to secondary SGSNs at the same time.

Said changing of the primary SGSN by the RNC may be performed when the primary RAB between said RNC and said primary SGSNs has to be released due to some reasons (e.g., multicast subscribers log off or switch or links fail), that is to say, the RNC chooses a path from the secondary SGSNs as the new receiving path, informs the new primary SGSN to send multicast traffic, and maintains the connections to other secondary SGSNs at the same time.

Said changing of the primary SGSN by the RNC may also be performed when the SGSN that has not established a RAB connection to the RNC initiates a RAB request to the RNC. When a new SGSN initiates a RAB request to the RNC, the operation state of the network may vary, for example, the load on the original primary RAB link may be no longer optimal. In this case, the primary SGSN and the primary RAB should be changed. Thus the RNC may deprive the primary RAB of its qualification and promote a secondary to the primary RAB, and the RNC will receive multicast traffic from the new primary RAB.

The basis for the RNC's choosing a receiving path may be a random selection or a deliberate selection of the RNC from the secondary SGSNs in terms of the precedence of receiving paths, the quality of transmission links, the load on transmission links, the precedence of RAB establishment, and requirements of SGSNs for multicast QoS, etc.

Before the RNC determines the primary receiving path, it should consult or reconsult the QoS requirement of Multicast RAB with individual SGSN, in order to ensure that the multicast RAB on the primary receiving path can satisfy all requirements of the primary SGSN and secondary SGSNs.

During the transmission process of multicast traffic, the secondary SGSN do not forward the data packets or only forward compressed messages if the amount of data packets received from the GGSN by the SGSN, and it is deemed that the RNC has already received the multicast traffic. On this basis, the SGSN calculates the multicast traffic streams forwarded to multicast subscribers. Said compressed messages are very short messages, such as summary of multicast data packets, IP packet heads, packet numbers of multicast data packets, or a packet number list, etc. The object of sending compressed messages from the secondary SGSNs to the RNC continuously is to maintain the connections between them as well as reduce the total data volume. When the secondary SGSNs don't send multicast data packets or only send compressed messages to the RNC, the RNC may send a statistical message about the multicast data packets received from the primary SGSN to the primary SGSN and each secondary SGSN, e.g., the multicast traffic volume received from the primary SGSN and the multicast traffic volume sent via air interface, etc.

The present invention is described in further detail through the process of establishing multicast RAB and the process of changing the multicast RAB.

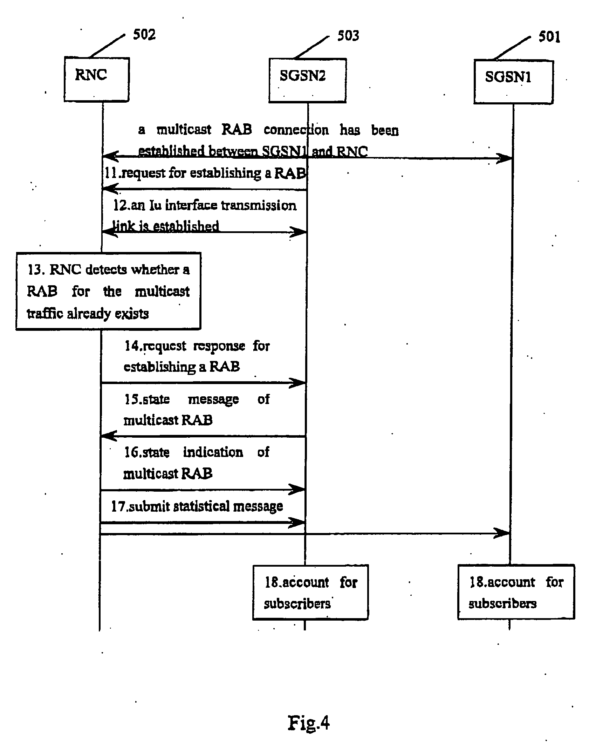

Fig.4 is the flowchart of establishing the multicast RAB. In Fig.4, the RNC has established a RAB connection for multicast service A to SGSN1. At this time, SGSN2 requests establishing a new RAB connection for multicast service A to the RNC. The steps are described as the following:
in step 11, SGSN2 initiates a request for establishing a RAB connection to the RNC, and the request message includes the QoS requirements for multicast service A, identifier of identifying multicast service A for the access network, and Iu interface parameters, etc.;
in step 12, the RNC receives the RAB establishing request and establishes an Iu interface transmission link to SGSN2;
in step 13, the RNC verifies the RAB connection for multicast service A to SGSN1 according to the identifier of multicast service A, and then determines whether to change the primary SGSN; suppose the primary SGSN is determined not to change, the RNC will process to step 14;
in step 14, the RNC sends a response to the RAB establishing request to SGSN2 to indicate the multicast RAB has been established and indicate that there is no need to forward the multicast traffic through the Iu connection. The response message comprises: configuration of QoS parameters for multicast service A, Iu interface parameters, multicast traffic forwarding parameter (e.g., handshake time interval Δt, format of compressed messages, etc.);
in step 15, SGSN2 sends a state message to RNC once everyΔt. The state message comprises: the amount of multicast data packets not forwarded to the RNC by SGSN, the serial number of the current data packet waiting to be sent to the RNC, etc.;
in step 16, the RNC verifies whether the state message sent by SGSN2 is consistent to the message of multicast service A, if not, the RNC reports the current state of itself to SGSN2; if yes, the RNC sends a state instruct and informs SGSN2 of keeping current state;
in step 17, the RNC sends a statistical message to SGSN1 and SGSN2 at the interval
of specific time to report the volume of multicast traffic received from SGSN1 and SGSN2 respectively and the volume of multicast traffic sent via the air interface;
in step 18, SGSN1 and SGSN2 perform accounting for multicast subscribers according to volume of multicast traffic, QoS, and other information.

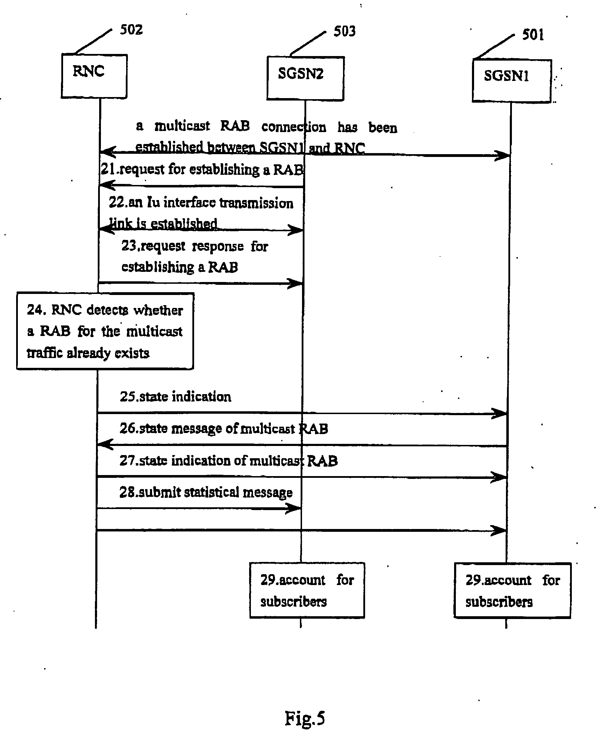

Fig.5 is the flowchart for changing the multicast RAB, wherein the RNC has established a RAB connection for multicast service A to SGSN1. At this time, SGSN2 requests establishing a new RAB connection for multicast service A to the RNC. The steps are described as the following:
in step 21, SGSN2 initiates a request for establishing a RAB connection to the RNC, and the request message includes the QoS requirements for multicast service A, identifier of identifying multicast service A for the access network, and Iu interface transmission link parameters, etc.;
in step 22, the RNC receives the RAB establishing request and establishes an Iu interface transmission link to SGSN2;
in step 23, the RNC sends a response to the RAB establishing request to SGSN2 to indicate the multicast RAB has been established. The response message comprises: configuration of QoS parameters for multicast service A, Iu interface parameters, etc.;
in step 24, the RNC verifies the RAB connection for multicast service A to SGSN1 according to the identifier of multicast service A, and then determines whether to change the primary SGSN; suppose the primary SGSN is determined to change, the RNC chooses SGSN2 as the primary SGSN and the RAB to SGSN2 as the primary receiving path, then process to step 25;
in step 25, the RNC receives multicast traffic from SGSN2, and it indicates SGSN1 not to forward multicast traffic. The indication message comprises: multicast traffic forwarding parameter (e.g., handshake time interval Δt, format of compressed messages, etc.);
in step 26, SGSN1 sends a compressed message for current multicast data packet to RNC once everyΔt. The compressed message comprises: IP packet heads and serial numbers of the current IP multicast data packets, etc.;
in step 27, the RNC verifies whether the state message sent by SGSN1 is consistent to the information of multicast service A. If not, the RNC reports the current state of itself to SGSN2; if yes, the RNC sends a state instruct and informs SGSN2 of keeping current state;
in step 28, the RNC sends a statistical message to SGSN1 and SGSN2 at the interval of specific time to report the volume of multicast traffic received from SGSN1 and SGSN2 respectively and the volume of multicast traffic sent via the air interface;
in step 29, SGSN1 and SGSN2 perform accounting for multicast subscribers according to volume of multicast traffic, QoS, and other information.

## Claims

1. A method for implementing Iu-Flex-based MBMS, comprising:
(1) a Serving General Packet Radio Service Support Node hereinafter referred to as SGSN(501) sending a Radio Access Bearer hereinafter referred to as RAB request for the MOMS to the Radio Network Controller hereinafter referred to as RNC (502), then the RNC (502) according to the request establishing a corresponding RAB for the multicast service with said SGSN (501) sending the request the said method being **characterised in that** it further comprises;
(2) the RNC (502) detecting whether there is a plurality of multicast traffic streams, from other SGSNs, corresponding to the multicast service, if yes, the RNC (502) choosing a SGSN as a primary SGSN (503) and taking the RAB between the primary SGSN (503) and the RNC (502) as a primary path to receive the multicast traffic, taking other SGSNs as secondary SGSNs and maintaining RAB connections with said secondary SGSNs by sending minimum data volume or zero data volume from said secondary SGSNs to said RNC (502) and;
(3) the multicast traffic being transmitted through the primary SGSN (503).

2. A method for implementing MBMS according to claim 1, further comprising: the RNC (502) determining whether to change the primary SGSN (503), if yes, choosing one of the secondary SGSNs as a primary SGSN.

3. A method for implementing MBMS according to claim 2, wherein said changing of the primary SGSN (503) by said RNC (502) is performed when the network requires releasing the RAB between the RNC (502) and the primary SGSN(503).

4. A method for implementing MBMS according to claim 2, wherein said changing of the primarySGSN (503) by said RNC (502) is performed when a SGSN that hasn't established a RAB connection to said RNC (502) initiates a RAB request.

5. A method for implementing MBMS according to claim 3 or 4, wherein said choosing one of the secondary SGSNs as the primary SGSN (503) is performed according to the precedence of multicast data packets received through the RABs between said RNC (502) and said secondary SGSNs, a quality of the transmission links, a load on the transmission links, the precedence of establishing said transmission links, and Quality of Service hereinafter referred to as QoS requirements of each SGSN for the multicast service.

6. A method for implementing MBMSaccording to claim 5, wherein before determining the primary SGSN (503), said RNC (502) consults with each SGSN for the QoS requirements of the multicast RAB so that the multicast RAB of the established primary receiving path can meet the requirements of the primary SGSN (503) and all the secondary SGSNs.

7. A method for implementing MBMS according to claim 6, further comprising: when the amount of data packets received by a secondary SGSN from a GGSN doesn't exceed a restriction of the RNC (502), said SGSN will not forward the data packets received from said GGSN to said RNC (502) or forward compressed messages to said RNC (502), and said RNC is deemed to have already received the multicast traffic.

8. A method for implementing MBMS according to claim 7, further comprising: when the secondary SGSNs do not forward multicast data packets or forward only compressed messages to the RNC (502), said RNC (502) sending a statistical message about the multicast data packets received from the primary SGSN (503) to said primary SGSN (503) and each secondary SGSN.

## Patentansprüche

1. Verfahren zur Implementierung von Iu-Flex-gestütztem MBMS mit den folgenden Schritten:
(1) in einem Serving-Unterstützungsknoten eines Allgemeinen Paketfunkdienstes, nachfolgend als SGSN (501) bezeichnet, erfolgendes Senden einer Funkzugangsträger-, nachfolgend bezeichnet als RAB, -Anforderung für den MBMS an den Funknetzwerk-Controller, nachfolgend als RNC (502) bezeichnet, anschließendes im RNC (502) erfolgendes anforderungsgemäßes Aufbauen eines entsprechenden RAB für den Multicast-Dienst mit dem SGSN (501), der die Anforderung sendet, wobei das Verfahren **dadurch gekennzeichnet ist, daß** es ferner den folgenden Schritt umfaßt:
(2) im RNC (502) erfolgendes Ermitteln, ob es eine Vielzahl von Multicast-Verkehrsströmen von anderen SGSNs gibt, die dem Multicast-Dienst entsprechen; wenn ja, im RNC (502) erfolgendes Wählen eines SGSN als einen primären SGSN (503) und Nehmen des RAB zwischen dem primären SGSN (503) und dem RNC (502) als einen primären Weg, um den Multicast-Verkehr zu empfangen, Nehmen anderer SGSNs als sekundäre SGSNs und Beibehalten von RAB-Verbindungen mit den sekundären SGSNs durch Senden eines minimalen Datenvolumens oder eines Null-Datenvolumens von den sekundären SGSNs an den RNC (502); und
(3) Übertragen des Multicast-Verkehrs über den primären SGSN (503).

2. Verfahren zur Implementierung von MBMS nach Anspruch 1, ferner mit dem folgenden Schritt: Im RNC (502) erfolgendes Bestimmen, ob der primäre SGSN (503) geändert werden muß; wenn ja, Wählen eines der sekundären SGSNs als einen primären SGSN.

3. Verfahren zur Implementierung von MBMS nach Anspruch 2, wobei das Ändern des primären SGSN (503) vom RNC (502) durchgeführt wird, wenn das Netzwerk den Abbau des RAB zwischen dem RNC (502) und dem primären SGSN (503) erfordert.

4. Verfahren zur Implementierung von MBMS nach Anspruch 2, wobei das Ändern des primären SGSN (503) vom RNC (502) durchgeführt wird, wenn ein SGSN, der keine RAB-Verbindung zum RNC (502) aufgebaut hat, eine RAB-Anforderung auslöst.

5. Verfahren zur Implementierung von MBMS nach Anspruch 3 oder 4, wobei das Wählen eines der sekundären SGSNs als den primären SGSN (503) entsprechend der Priorität von Multicast-Datenpaketen, die über die RABs zwischen dem RNC (502) und den sekundären SGSNs empfangen werden, einer Qualität der Übertragungsverbindungen, einer Last auf den Übertragungsverbindungen, der Priorität des Aufbaus dieser Übertragungsverbindungen und der Dienstqualitäts-, nachfolgend bezeichnet als QoS, -Anforderungen jedes SGSN für den Multicast-Dienst durchgeführt wird.

6. Verfahren zur Implementierung von MBMS nach Anspruch 5, wobei der RNC (502) vor dem Bestimmen des primären SGSN (503) sich mit jedem SGSN wegen der QoS-Anforderungen des Multicast-RAB berät, so daß der Multicast-RAB des aufgebauten primären Empfangswegs die Anforderungen des primären SGSN (503) und aller sekundären SGSNs erfüllen kann.

7. Verfahren zur Implementierung von MBMS nach Anspruch 6, ferner mit dem folgenden Schritt: Wenn die Menge der durch einen sekundären SGSN von einem GGSN empfangenen Datenpakete keine Beschränkung des RNC (502) überschreitet, leitet der SGSN die vom GGSN empfangenen Datenpakete nicht an den RNC (502) weiter oder leitet komprimierte Nachrichten an den RNC (502) weiter, und der RNC scheint den Multicast-Verkehr bereits empfangen zu haben.

8. Verfahren zur Implementierung von MBMS nach Anspruch 7, ferner mit dem folgenden Schritt: Wenn die sekundären SGSNs an den RNC (502) keine Multicast-Datenpakete weiterleiten oder nur komprimierte Nachrichten weiterleiten, sendet der RNC (502) eine statistische Nachricht über die vom primären SGSN (503) empfangenen Multicast-Datenpakete an den primären SGSN (503) und jeden sekundären SGSN.

## Revendications

1. Procédé pour mettre en oeuvre MBMS basé sur Iu-Flex, comprenant :
(1) un Noeud de Support de Service Radio par Paquets Général de Desserte ci après appelé SGSN (501) qui envoie une requête de Support d'Accès Radio ci après appelé RAB pour le MBMS au Contrôleur de Réseau Radio ci après appelé RNC (502) puis le RNC (502), conformément à la requête, établit un RAB correspondant pour le service multidiffusion avec ledit SGSN (501) qui envoie la requête, ledit procédé étant **caractérisé en ce qu'**il comprend en outre:
(2) le RNC (502) détectant s'il y a une pluralité de flux de trafic de multidiffusion, à partir d'autres SGSN, correspondant au service de multidiffusion ou non et si oui, le RNC (502) choisit un SGSN en tant que SGSN primaire (503) et considérant le RAB entre le SGSN primaire (503) et le RNC (502) en tant que voie primaire pour recevoir le trafic de multidiffusion, considérant d'autres SGSN en tant que SGSN secondaires et maintenant des connexions de RAB avec lesdits SGSN secondaires en envoyant un volume de données minimum ou zéro volume de données depuis lesdits SGSN secondaires jusqu'audit RNC (502) ; et
(3) le trafic de multidiffusion étant transmis par l'intermédiaire du SGSN primaire (503).

2. Procédé pour mettre en oeuvre MBMS selon la revendication 1, comprenant en outre le fait que le RNC (502) détermine si oui ou non il convient de changer le SGSN primaire (503) et si oui, il choisit l'un des SGSN secondaires en tant que SGSN primaire.

3. Procédé pour mettre en oeuvre MBMS selon la revendication 2, dans lequel ledit changement du SGSN primaire (503) par ledit RNC (502) est réalisé lorsque le réseau a besoin de la libération du RAB entre le RNC (502) et le SGSN primaire (503).

4. Procédé pour mettre en oeuvre MBMS selon la revendication 2, dans lequel ledit changement du SGSN primaire (503) par ledit RNC (502) est réalisé lorsqu'un SGSN qui n'a pas établi une connexion de RAB sur ledit RNC (502) initie une requête de RAB.

5. Procédé pour mettre en oeuvre MBMS selon la revendication 3 ou 4, dans lequel ledit choix de l'un des SGSN secondaires en tant que SGSN primaire (503) est réalisé conformément à la préséance de paquets de données de multidiffusion qui sont reçus par l'intermédiaire des RAB entre ledit RNC (502) et lesdits SGSN secondaires, à une qualité des liaisons de transmission, à une charge sur les liaisons de transmission, à la préséance d'établissement desdites liaisons de transmission et à des exigences de Qualité de Service ci après appelée QoS de chaque SGSN pour le service de multidiffusion.

6. Procédé de mise en oeuvre de MBMS selon la revendication 5, dans lequel, avant la détermination du SGSN primaire (503), ledit RNC (502) consulte chaque SGSN concernant les exigences de QoS du RAB de multidiffusion de telle sorte que le RAB de multidiffusion de la voie de réception primaire établie puisse satisfaire les exigences du SGSN primaire (503) et de tous les SGSN secondaires.

7. Procédé de mise en oeuvre de MBMS selon la revendication 6, comprenant en outre le fait que, lorsque la quantité de paquets de données qui sont reçus par un SGSN secondaire depuis un GGSN n'excède pas une restriction du RNC (502), ledit SGSN ne renverra pas les paquets de données qui sont reçus depuis ledit GGSN jusqu'audit RNC (502) ou renverra des messages comprimés audit RNC (502) et ledit RNC est sensé avoir déjà reçu le trafic de multidiffusion.

8. Procédé de mise en oeuvre de MBMS selon la revendication 7, comprenant en outre le fait que, lorsque les SGSN secondaires ne renvoient pas des paquets de données de multidiffusion ou renvoient seulement des messages comprimés au RNC (502), ledit RNC (502) envoie un message statistique concernant les paquets de données de multidiffusion qui sont reçus depuis le SGSN primaire (503) sur ledit SGSN primaire (503) et chaque SGSN secondaire.
